(19) Europäisches Patentamt

European Patent Office

Office européen des brevets

(11) **EP 1 195 937 A1**

(12) **EUROPEAN PATENT APPLICATION**

(43) Date of publication:
10.04.2002 Bulletin 2002/15

(51) Int Cl.⁷: **H04L 1/06**, H04L 27/26, H04B 1/707

(21) Application number: 00121621.7

(22) Date of filing: 03.10.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **TELEFONAKTIEBOLAGET LM ERICSSON**
**126 25 Stockholm (SE)**

(72) Inventors:
• **Thielecke, Jörn**
  **91058 Erlangen (DE)**

• **Wachsmann, Udo**
  **91126 Schwabach (DE)**
• **Schotten, Hans**
  **90491 (DE)**

(74) Representative: **Schmalz, Günther**
**Ericsson Eurolab Deutschland GmbH,**
**Nordostpark 12**
**90411 Nürnberg (DE)**

(54) **Space-time coding with orthogonal transformations**

(57)   A space-time coding method is proposed, in which data streams are subject to orthogonal transformation before the coding. Combinations with multicarrier and multicode transmission, and with adaptive channel coding are also described.

Fig. 2

**Description**

FIELD OF THE INVENTION

The present invention relates generally to the field of communication systems for example wireless communications, such as cellular radio. The invention particularly relates to the field of encoding and decoding multi-layered signals by demultiplexing an input signal into a plurality of subsignals which are encoded differently.

BACKGROUND OF THE INVENTION

Spectrum has become a scarce and expensive radio resource. Therefore when designing a radio system and in particular a mobile communication system it is essential to focus on bandwidth and spectral efficiency. Conventionally there used to be a single radio link between a transmitter and a receiver. For the described reasons it became more and more common to equip not only a base station but also increasingly terminals with multiple antennas. Another approach is to dissolve the different delays of signals that have travelled through different channels. This results in multiple-input multiple-output (MIMO) channels.

Such a MIMO channel offers in theory a much greater (channel or link) capacity potential than a single channel with only one antenna at the transmitter and one antenna at the receiver. The crucial question regarding a MIMO channel is how to design a transmission scheme that is capable of exploiting that theoretical capacity potential in practice.

DESCRIPTION OF THE PRIOR ART

Antenna diversity is a widely known technique to reduce the effects of fast fading, e.g. Rayleigh fading. To benefit from the effect of two or more transmitting antennas the signals that are emitted by each antenna have to be distinct from each other. Inter alia early techniques used delays between the antennas to emit identical but time shifted signals or signals that had been encoded in different ways. In order to increase diversity gain and/or to add some coding gain Arthur R. Calderbank disclosed in WO 97/41670 design criteria to construct so-called space-time codes (STC). As the name STC indicates it is a combination of spatial and temporal diversity techniques. Generating different symbols for the same input data and transmitting each symbols over a different antenna effects spatial diversity. Temporal diversity is effected by redundantly transmitting symbols with same information content at different times. Calderbank proposed for generating the symbols either trellis codes or block codes having a trellis representation. This keeps the construction of a corresponding receiver very simple, if multiple receive antennas are used. Thanks to the trellis structure of the transmitted signal a maximum likelihood decoder like a Viterbi decoder can be used.

Alternatively S. Alamouti disclosed in WO 99/14871 a block-coding scheme which for spatial diversity generates symbols that just differ in sign or/and are the complex conjugate of each other. This coding scheme is very simple, as it needs only basic arithmetic operations, such as negation and conjugation. Additionally the symbols are permutated within each block. This coding scheme also allows a simple receiver structure.

It can be shown that the transmission capacity of the described space time coded transmission techniques in the presence of noise signals in best case grows only logarithmically while capacity of an underlying MIMO channel grows linearly with the number of channels or antennas. Because of fundamental information theoretical limits high data rates are only achievable at a high signal to noise ratio (SNR). Assuming such high SNR the difference between the theoretical capacity of the MIMO channels and STC becomes even more significant. This means regarding an application with multiple receive antennas a partially significant reduction in potential data rate has to be accepted.

To make an substantial approach towards the Shannon limit Gerard J. Foschini proposed in EP 0 817 401 A2 a layered space-time architecture employing multi-element antennas. The transmitter for that layered space-time architecture comprises a multiplexer for multiplexing a stream of data received from a source of data into a plurality of substreams of data. These substreams are supplied to modulator/encoder circuits, which may independently encode and then modulate their respective data streams. The encoded substreams are supplied to a commutator, which associates each of the encoded substreams of data with each of a plurality of antenna elements, whereby the association e.g. is for a predetermined duration of time. Thus the association between an output stream of one of the modulators/encoders and an antenna is periodically cycled. The idea is that the encoded data streams share a balanced presence over all transmission paths to a receiver and therefore none of the individual bit streams is contiguously subjected to the worst of all paths.

A corresponding digital wireless receiver comprises a plurality of antennas and a bank of conventional RF receiver sections, which interface with the antennas. A preprocessor receives the signals of the antennas as respective signal vectors and eliminates interference between the signal components using nulling and subtraction of previously detected symbols. A Decoder processes the preprocessed signal vectors to detect the constituent data substreams and thus the symbols representing the encoded substreams. The Decoder then supplies the symbols to the preprocessor so that interference from signals already detected may be subtracted from the received signal vector. A multiplexer then multiplexes the substreams to reconstruct the original data stream.

The theoretical gain of that coding scheme that is now named BLAST (BellLabs Layered Space Time Architecture) looks promising. The transmit signal structure of BLAST implies independent symbols at the antennas. All antenna signals have equal average power and the same code rate if channel coding is applied. Unfortunately recent studies showed that in practical systems the performance of BLAST is limited by error propagation. Especially, for the first antenna signal to be decoded $N_T$ receive antenna signals have to be used for interference suppression. That means, that only the difference $N_R$-$N_T$ between the number of transmit antennas $N_T$ and the number of receive antennas $N_R$ remains to exploit receive diversity. Hence, in the case that the number of receive antennas equals the number of transmit antennas $N_T$=$N_R$ no diversity is left for decoding the first antenna signal. Thus in most cases the overall performance is determined by the first decoded signal limiting the achievable transmission rate.

SUMMARY OF THE INVENTION

It is an object of the invention to improve transmission quality in MIMO systems also under bad conditions like poor signal to noise ratio.

This object is achieved by a method comprising the steps of mutually superimposing the subsignals and applying diversity to each subsignal.

By these encoding steps the transmit signal consists of multiple layers to which diversity has been applied. These especially constructed layers are named in the following as strata to distinguish these strata from the layers known from prior art. The strata allow a staged decoding which is far less complex and almost as powerful as an optimum decoder. Every stratum is associated with a substream of the data stream. The transmit signal is created thus that full diversity is achieved for transmission in every stratum.

In contrast to the known layered space time technique, where each data layer is assigned exclusively to one of the $N_T$ available transmit antennas, the coding scheme according to the invention constructs the signals of each stratum thus that each stratum stream is transmitted preferably via each transmit antenna. In the case that one of the transmit antennas is opposed to bad propagation conditions thus that all paths from that antenna are effectively lost in prior art layered space time technique. This will result in a total loss of all information transmitted via this antenna, since in prior art technique the data streams are constructed to be independent from each other. Therefore it would not be possible to recover the lost data. However with the coding scheme of the invention the bad conditions for different antennas may be compensated by transmission via other paths since each layer experiences every path. That means with that concept capacity is achievable for a given propagation and disturbance situation.

The advantage of this coding scheme is that a repetition like in prior art space time coding schemes is avoided and independent symbols are achieved. Additionally full diversity is available at the receiver for each signal to be decoded.

In a further embodiment of the invention the transmit signal is adapted to the actual channel conditions in order to enable receiver techniques based on successive decoding with interference cancellation without wasting transmission capacity. Due to the special construction of the signal strata the variation in rate and/or power being signalled back and adapted at the transmitter are significantly reduced. As this coding scheme provides equal channels for all strata, all paths are experienced by every stratum and thus the channel characteristics for each individual stratum is much more balanced.

Preferably each data stream is transmitted on the same power level and only the code rate of each data stream is adapted. Same power levels will balance the interference situation at the receiving antennas. If an appropriate coding technique like e.g. space-time coding is used for generating diversity this will also ensure uncorrelated antenna signals. In comparison hereto power adaptation encoders enabling different code rates are more or less a little bit more complicated. Using convolutional codes code rate adaptation may be easily accomplished by puncturing.

For some reasons it might also be considered not to use a feedback channel e.g. if the channel and hence the resolution adaptation changes too fast or in the case of broadcasting information to a plurality of receivers. If it is not considered to use a feedback channel, or as a fall-back solution when a feedback channel can not or should not be used momentarily, another possibility is to use an iterative decoder. Thus power and code rate at the transmitter could be chosen to be equal for all data strata.

Different code rates according to the order of decoding are also possible, e.g. the stratum to be decoded first may be given the lowest code rate since interference of all other strata is present and so on. Such different code rates in certain situations will accelerate convergence of iterative decoding.

Due to the signal structure of the proposed coding scheme it could be presumed that every stratum's signal undergoes comparatively similar channel and interference situations. That means available diversity and disturbing interference is similar for all strata. Therefore, in a staged decoding procedure each individual decoder has to cope with similar noise and interference conditions except for the fact that the interference of previously decoded signals may be removed. Thus ideal conditions are provided by the proposed coding scheme to use iterative decoding techniques like the so-called turbo decoding. Such a decoding provides near maximum-likelihood decoding performance with already a few iterations.

E.g. the decoder of the first stratum may experience a channel and interference situation which exceeds its error-correcting capabilities. However, in a second or any further decoding cycle, the first decoder might succeed in providing the transmitted data correctly since the interference of the other strata has been reduced or even cancelled by the individual stratum decoders in a previous cycle.

BRIEF DESCRIPTION OF THE INVENTION

In the following the invention will be further described according to the figures and by means of examples

Fig. 1:     Block diagram of a MIMO transmitting system

Fig. 2      Transmitter according to the invention

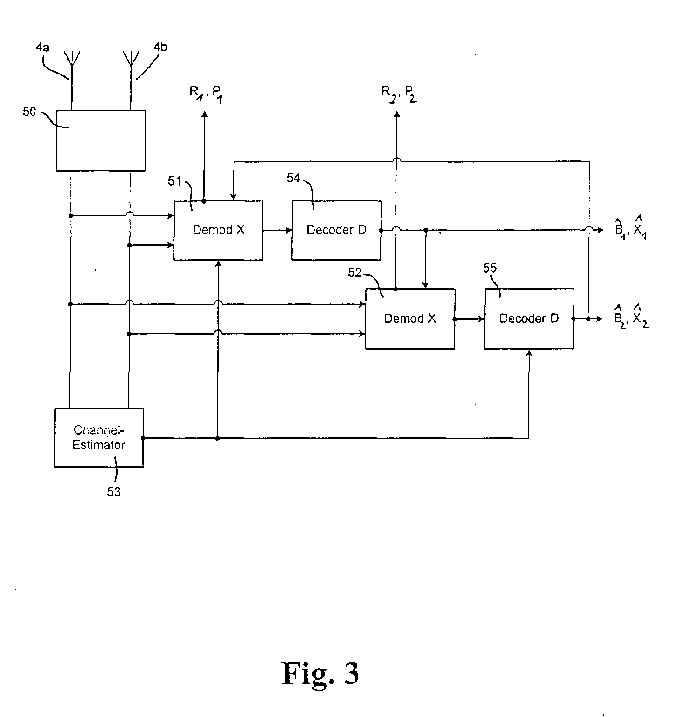

Fig. 3      Receiver according to the invention

Fig. 4      Multi-stratum generation with adaptive antennas

One aspect of the invention is that the receiver uses layered decoding, that means to give a short outline beforehand that signals of different layers are decoded successively whereby signals of already decoded layers are considered as disturbing interference. For layered decoding the following condition has to be met in practice

$$2 \leq \min(N_R, N_T) \leq N \leq N_T$$

where $N_R$ represents the number of receiving antennas, N the number of parallel data streams and $N_T$ the number of transmitting antennas. Just to be accurate the expression $\min(N_R, N_T)$ stands in general for the rank of the channel matrix which has as entries the coefficients of all existing paths. There is no benefit for making N larger than $\min(N_R, N_T)$ but the scheme still works.

In the following description of an embodiment of the invention a configuration that meets the minimum requirements $N_R = 2$, $N = 2$ and $N_T = 2$ has been chosen for reasons of clarity and conciseness.

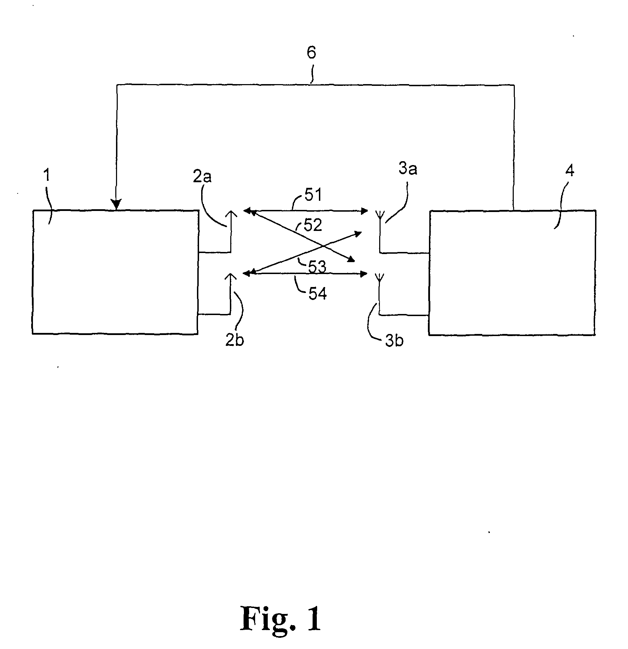

Fig. 1 gives a coarse overview of a transmitting system with at least one transmitter 1 and one receiver 4. For bi-directional communication the transmitter 1 and the receiver 4 will be part of transceivers, each providing a transmitter as well as a receiver. In the case of a mobile communication system of course there will be a so-called base station, equipped with a plurality of transceivers for serving a plurality of mobile transceivers. Nevertheless this minimum system is sufficient to explain the invention.

The transmitter 1 emits via two transmitting antennas 2a, 2b signals constructed according to the modulation scheme disclosed by the invention. As in this embodiment at the receiver 4 there are also two receiving antennas 3a, 3b four possible paths 51, 52, 53 and 54 could be distinguished in the multiple input multiple output (MIMO) channels. Further in the first embodiment of the invention a feedback channel 6 is provided. Although this feedback channel is indicated in Fig. 1 only by a single line in a bi-directional transmission system this feedback channel 6 usually will be realised by embedding feedback information into other user information sent back in the other direction. Thus the feedback information may be also sent via MIMO channels.

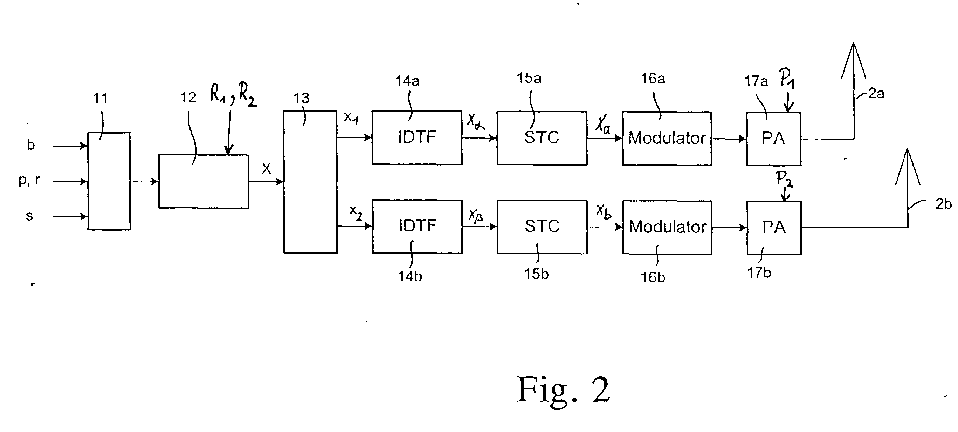

Fig. 2 shows in more detail those parts of the transmitter 1, which are in direct relation to the invention. Other parts not affected by the invention, like power supply etc. have been omitted for the purpose of clarity. Usually useful data b (e.g. speech coded data or data of a file transfer) to be transmitted to a particular user will be present as a stream of data items, like bits. Depending on the system architecture other data, like control data p, r or signalling data s may be added, e.g. by means of a multiplexer 11 to form a stream of unprotected user data. By means of a channel encoder 12 redundant information calculated from the user data is added for the purpose of improving transmission quality and providing error protection. E.g. in the world wide spread GSM system block convolutional codes, a Fire-code and parity codes are used for this purpose. The output of the channel encoder are transmission symbols X stemming from a symbol alphabet e.g. QAM symbols. That means a possible mapping from coded bits to symbols is included in the channel encoding unit.

The channel encoder 12 of this embodiment is provided with a code rate adaptation controlled by the receiver 4 via the feedback channel 6. The control values $R_1$, $R_2$, which have been received via the feedbach channel 6 are used to individually set the data rate of each stratum. As it will be explained later on in more detail the purpose of code rate adaptation is to increase redundancy if a loss in transmission quality is encountered and vice versa.

The design of such a code rate adaptable channel encoder 12 depends on the available bandwidth of the transmission system. If only a constant bandwidth (= constant data rate of the channel encoded data) is available also the data rate of the source signal has to be reduced to spent the saved data for channel encoding. A technique to adjust the amount of added redundancy is the so-called puncturing. The rate adapted source signal is always encoded with constant redundancy giving a constant error protection. The volume of redundancy could be chosen thus that a source signal with a data rate adjusted at the lowest level together with the added redundancy reaches exactly the available transmission data rate. Due to the constant redundancy the overall data rate at a higher source data rate would exceed the available data rate. But as a higher source data rate is admitted because of a higher transmission quality that allows using less error protection some of that redundancy has become superfluous. Therefore specific redundant information can be removed to achieve the available transmission data rate without putting receive quality in jeopardy.

Usually adaptation of speech source data rate is limited or even impossible. Newer communication systems like the third generation partners project (3GPP) have been designed from the beginning with selectable transmission capacities. In a system like this if more error protection is required a central control station for allocating more transmission capacity for a disturbed communication link could handle this request.

For purposes of file transfer an adaptation of the source data rate in most cases is not as crucial as for speech encoded data. Expanding error protection will of course increase transmission time, but for non-time-critical applications like reading e-mail an increase of transmission time will be tolerated in favour of error free reception.

After encoding the channel encoded data stream X is then demultiplexed by a demultiplexer 13 into a number N of substreams. As already pointed out the number of substreams ideally matches the rank of the channel matrix, which corresponds in most cases $\min(N_R, N_T)$. In praxis N can be chosen to match the number $N_T$ of transmit antennas. In this embodiment accordingly two substreams $x_1$ and $x_2$ are provided.

The data items of each data substream are grouped ongoing into data elements $x_{11}$, $x_{12}$, ... and $x_{21}$, $x_{22}$, ... Every two data elements $x_{11}$, $x_{12}$ and $x_{21}$, $x_{22}$ of each substream are combined to form data vectors $X_1$, $X_2$

$$X_1 = [x_{11}, x_{12}]$$

$$X_2 = [x_{21}, x_{22}]$$

The data vectors $X_1$, $X_2$ then are mutually superimposed by means of transformers 14a, 14b to two superimposed vectors $X_\alpha$, $X_\beta$ before space-time coding. Space-time coding, or in general every diversity achieving scheme relies on the fact that replicas of one data vector are transmitted in different manners and combine the results appropriately at the receiver.

The purpose of superimposition is that at he input of the following diversity encoder, e. g. a space-time block encoder, N independent data vectors are provided. If N is less than $N_T$ the remaining $N_T$ - N input vectors may be filled by arbitrary copies out of the independent N ones. However, it is important that with respect to an individual data vector, e.g. $X_1$, the input vectors to the diversity encoder are again replicas of each other maybe except for some phase shifts or other modifications if all other data vectors are set to zero. By this kind of superimposition the original diversity achieving features of any diversity encoder are preserved.

Preferably for superimposition an orthogonal transformation is used, since it ensures that the input vectors at the following diversity encoder are uncorrelated and an orthogonal transformation will make it easier to separate the superimposed data substreams at the receiver. For the two vectors $X_1$, $X_2$ of this embodiment an orthogonal superimposition for example will give

$$x_\alpha = [x_{11} + x_{21}, x_{12} + x_{22}]$$

$$x_\beta = [x_{12} - x_{22}, x_{11} - x_{21}]$$

As it is known an orthogonal transformation can be achieved by an inverse discrete Fourier transform (IDFT), a Walsh transform or a Hadamard transform just to list some possibilities. By this the superimposition takes place along the spatial dimension. That means, only symbols from the same time instant are involved in the transformation.

The orthogonized vectors $X_\alpha$, $X_\beta$ are then input each to diversity encoders 15a, 15b giving two encoded vectors $X_a$, $X_b$, the elements of which form transmit symbols that are fed to modulators 16a, 16b. As in the embodiment of the invention a space-time block code according to Alamouti has been chosen the values of the encoded vectors are

$$X_a = [x_{11} + x_{21}, - (x_{12} + x_{22})^*]$$

$$X_b = [x_{12} - x_{22}, (x_{11} - x_{21})^*]$$

where the "*" denotes a complex conjugate. Thus the encoded vectors $X_a$, $X_b$ comprise overlapped space-time encoded replicas of the original data vectors $X_1$, $X_2$ but differently modified such that orthogonality between all data vectors is ensured. As it can be easily seen due to the combination of replication and orthogonality the four transmit symbols

$$S_{11} = x_{11} + x_{21}$$

$$S_{12} = - (x_{12} + x_{22})^*$$

$$S_{21} = x_{12} - x_{22}$$

$$S_{22} = (x_{11} - x_{21})^*$$

are independent of each other.

The symbols $S_{11}$, $S_{12}$, $S_{21}$, $S_{22}$ are then fed to two modulators 16a, 16b, one for each transmitter branch. Each modulated signal is then amplified by separate power amplifier 17a, 17b and emitted by two transmit antennas 2a, 2b. In this embodiment power control signals $P_1$, $P_2$, which have been received via the feedback channel 6 are used to control the output power level of each power amplifier 17a, 17b.

With the described combination of orthogonal superimposition and replication the repetition nature of diversity signals is no longer present in the symbols. Thus the major drawback e.g. of conventional STC is overcome. In principle, the capacity of this coding scheme for $N_T = 2$ is equal to the capacity of the underlying MIMO channel. For more than two transmit antennas $N_T > 2$ STC will cause a rate loss. However, the increase in capacity is still linear whereas STC for itself will offer only a logarithmic increase.

It also has been evaluated that is also possible to encode the channel-coded data streams first by a diversity encoder and then to apply the (orthogonal) superimposition. The resulting symbols may be different, so that this has to be taken into account in a corresponding receiver but the general advantage is preserved. Although in this example a space-time block code has been applied also a space-time trellis code will offer the same effect or any other diversity scheme like delay diversity.

A receiver adopted for the described coding scheme will make use of a modified layered decoding. Layered decoding, as known from BLAST means that firstly a first data vector $X_1$ is decoded treating the other data vectors $X_2$ as disturbing interference. After that first data vector X1 is decoded, the corresponding part of the receive signal related to that first data vector $X_1$ is subtracted from the receive signal of the antennas. Thus the remaining receive signal consists only of the remaining data vectors. In the described case, where the transmit signal is constituted by only two independent data vectors the remaining data vector already corresponds to the second data vector $X_2$. In general for N > 2, the number of interfering signals decreases by one for every decoded stratum. Only the last stratum may be decoded without interference.

For recovering the originally sent information a conventional receiver with an appropriate decoder may be used. As a person skilled in the art is familiar with the construction of a conventional receiver only a coarse description of such a conventional receiver is given.

Fig. 2 shows a first embodiment of a receiver that is adapted for the described coding scheme. To optimise transmission capacity over a currant channel situation the receiver of the first embodiment is based on adaptation of transmission parameters using a feedback channel to the transmitter.

The receive signals of each antenna 4a, 4b are processed in a RF receiving module 51 in the usual way, e.g. filtering, amplifying etc. for getting a data stream $Y_1$,

$Y_2$ of samples for each antenna signal. As already mentioned a resolvable data stream may result from separate antennas or from resolution of separate signal propagation paths, e.g. in a so-called RAKE receiver or any combination of this. These data samples are fed to separate demodulator units 51, 52, one for each resolved data signal. A channel estimator 53 provides channel coefficients that describe the estimated properties of each resolved data signal. Each demodulation unit 51, 52 uses these channel coefficients to compensate distortions introduced by each separate data signal.

For the decoding of MSSTC signals layered decoding is most convenient. Each demodulation unit 51, 52 pre-processes said receive signal samples $Y_1$, $Y_2$ prior to decoding them in separate decoders 54, 55. The preprocessing includes the space-time decoding and appropriate precompensation of the demodulated signals for channel decoding, e.g. an MMSE or a ZF approach may be chosen for preprocessing. Dependant on the actual implemented demodulation scheme, each channel seen from a decoder point of view is different. This so-called equivalent channel, which may be essentially characterised by its signal-to-noise ratio, defines the required transmission parameters for optimal exploitation of the respective transmission channel. In this embodiment the respective code rate $R_1$, $R_2$ and the respective transmission power levels $P_1$, $P_2$ are used as parameters. These parameters are evaluated by the respective demodulation units 51, 52 and are transmitted to the transmitter by means of feedback channel 6.

At first the first demodulating unit 51 demodulates the first data vector $X_1$ to get estimation values for the first orthogonal superimposed Vector $X_\alpha$. This estimated Vector is then decoded in the first decoder 54 to get estimations of data elements of the first data vector $X_1$. These estimated first data vectors are input to the second demodulator 52. The second demodulator is using the estimated values of the first data vector $X_1$ to calculate a compensation signal which is subtracted from the received signal in order to compensate those signal parts that originate from the first data vector $X_1$. Then the extracted signal is pre-processed according to the channel estimation giving an estimation for the second superimposed data stream of the transmitted signal. The second decoder 55 decodes an estimation for the data elements of the second data vector $X_2$.

The described decoding process may be repeated in an iterative manner in the case the channel varies too fast so that the adaptation can not follow or in the case there has no adaptation been implemented. E.g. power/code rate adaptation could be used only for one transmission direction, e.g. in down-link and in the other direction e.g. in up-link confidence is placed in iterative decoding. E.g. by this the more sophisticated techniques like adaptive rate encoders and iterative decoding is concentrated in a base station whereas the complexity in the mobile terminals could be kept relatively low.

Further advantageous application fields of the invention are orthogonal frequency-division multiplexing (OFDM) based transmission systems like the so-called HIPERLAN/2. In OFDM, the output symbols of a channel encoder are modulated onto sub-carriers being orthogonal to each other. There are in general two possibilities to apply the invention to OFDM. One possibility is to apply said transmit symbols $S_{11}$, $S_{12}$, $S_{21}$, $S_{22}$ of each stratum in time direction, e.g. to use a single sub-carrier for each encoded vector $X_a$, $X_b$ and to transmit the different transmit symbols one after another. For example according to the foregoing example with two transmit antennas the transmit symbols $S_{11}$, $S_{12}$ of the first encoded vector $X_a$ are transmitted alternately via a first transmit antenna whereas the transmit symbols $S_{21}$, $S_{22}$ of the second encoded vector $X_b$ are transmitted alternately via the second transmit antenna. To benefit from the space time coding effect the same sub-carriers should be used for the different transmitters. This is the preferred solution for quasi-static channels.

The other possibility is to apply the transmit symbols in frequency direction, e.g. to use as many sub-carriers as transmit symbols are provided for an encoded vector. Thus the transmit symbols of each encoded vectors are transmitted simultaneously via different sub-carriers. As by this the transmit time of a data vector X is reduced to symbol time this transmitting method is most suitable for fast varying transmit channels. To ensure a maximum of identical channel properties preferably neighboured sub-carriers should be used. Adjacent channels usually stand for the best chance of experiencing essentially the same channel attenuation and phase shift. Of course for special conditions a combination of these two possibilities may give the best trade-off result.

Another application field of the invention is the field of code-divison multiple access (CDMA) systems. In CDMA systems the transmitted signals can be time synchronised on a symbol level. Often orthogonal spreading codes are used to separate the data of different user. For the following embodiment of the invention one symbol is transmitted per spreading code. For example the symbol can be a BPSK, QPSK, or any QAM or PSK symbol. Already known systems like the 3rd generation partnership project (3GPP) Wideband-CDMA (W-CDMA) provide a set of orthogonal codes with different code lengths to support different data rates for different users and applications. Due to orthogonality the number of available spreading codes is limited. Spreading codes of shorter length, which allow to support higher data rates, block an accordingly larger part of the available spreading codes. Due to the nature of 3GPP the system capacity in the down-link suffers above all from the limited availability of orthogonal codes. Often a minimum spreading factor is defined since for example a minimum number of common control channels need to be transmitted in parallel to the user's signal. But this results in a limitation of the data rate available for each user. As a way out 3GPP provides the so-called multi-code transmission where a user is assigned more than one orthogonal code. The data stream of a user is serial to parallel converted and the parallel data streams are used to modulate the orthogonal codes assigned to the considered user.

Usually, if for example one symbol is transmitted per spreading code, the multi-code scheme allows transmitting L symbols per spreading code period using L orthogonal codes. At the time it is discussed to space-time encode the multi-code signal and transmitted these signals via two antennas. Using two antennas L/2 symbols are transmitted by each of the two antennas per spreading code using L orthogonal codes. The space-time coding scheme may be applied on each sub-signal before modulation with the orthogonal codes and summing up all different signals or the space-time coding may be applied to the multi-code signal.

The invention proposes to... instead of using the multi-code scheme as long as the number of available orthogonal codes L is less or equal to the number K of antennas. In case L is greater than K int(L/K)+1 orthogonal codes are used for the considered user. On each orthogonal signal the multi stratum scheme is applied.

With this combination of the MSSTC scheme and the multi-code scheme, L symbols are transmitted per spreading code period and per antenna using int(L/K)+1 orthogonal codes. Thus, for the same user data rate a smaller number of orthogonal codes is blocked - or for the same number of available orthogonal codes a higher data rate is supported. Alternatively, the spreading factor used can be increased still supporting the same data rate and blocking the same part of the orthogonal spreading codes.

In the following as an example K=2 antennas and spreading codes of spreading factor SF = 4 are used. With L = 2 orthogonal codes for the considered user, two symbols are transmitted per antenna and per code period. Using the known scheme by this half of the available orthogonal codes are blocked for transmission. Applying the MSSTC scheme according to the invention with the same data rate per antenna only one orthogonal code, i.e. 25% of the available codes has to be used. Using two orthogonal codes of spreading factor SF = 8 and applying the MSSTC scheme independently on both orthogonal codes only 25% of the orthogonal codes have to be used for the same data rate per antenna. Alternatively applying the MSSTC scheme independently on each orthogonal code using the same percentage of orthogonal codes the data rate may also be doubled.

It is important to note that the presence of multiple receive antennas is not a prerequisite to have MIMO channels. In general, the MIMO channel is characterised by the number of resolvable wave field components of the emitted signal. Therefore; e.g. multiple transmit antennas in a CDMA system together with a multipath propagation and a RAKE receiver constitute a MIMO channel as well. Although in the embodiments multiple receive antennas have been taken to describe the invention, it should be well understood that the invention applies to every MIMO channel.

Another application of the invention is the use of adaptive antennas. The core property of a signal based on adaptive antennas is that essentially the same signal goes via each antenna except that the signal phases are adjusted properly. The result is that the emitted waves superimpose themselves in a constructive manner. Common to such signal design approaches for MIMO channel is that they impose a certain structure on the transmit signal or in other words the transmit symbols are not independent of each other.

This structure or interdependence of symbols is imposed in order to achieve certain properties of the transmission scheme, e.g. reasonable receiver complexity. From an information theoretic point of view, such a structure leads to a reduction of the dimensionality of the transmit channel. If, e.g. $N_T = 3$ transmit antennas are present, a three-dimensional transmit signal with independent symbols being transmitted from the antennas may be constructed. Imposing e.g. a repetition structure on the transmit signal reduces the dimensionality to one, since only one symbol per channel use is effectively transmitted.

The dimensionality of the channel is equal to the rank of the channel matrix, In a MIMO environment the channel dimensionality will be greater than one in most cases. But if the channel has a dimensionality greater than one, then it is a waste of capacity to use a transmit signal with repetition structure. In general if the dimensionality of the transmit signal is lower than the dimensionality of the channel then the channel is not optimally exploited or in other words the capacity of the channel may not be achieved. Therefore any transmit signal containing a repetition structure does not achieve capacity.

The multi-stratum approach of the invention may be used to increase the dimensionality of the transmit signal by achieving independence among the symbols being transmitted via different antennas. At the same time the structure originally imposed on the transmit signal and by this the essential properties are retained in the individual strata. That means that e.g. the same receiver algorithms may be used in the individual strata as before while the spectral efficiency of the transmission scheme may be increased.

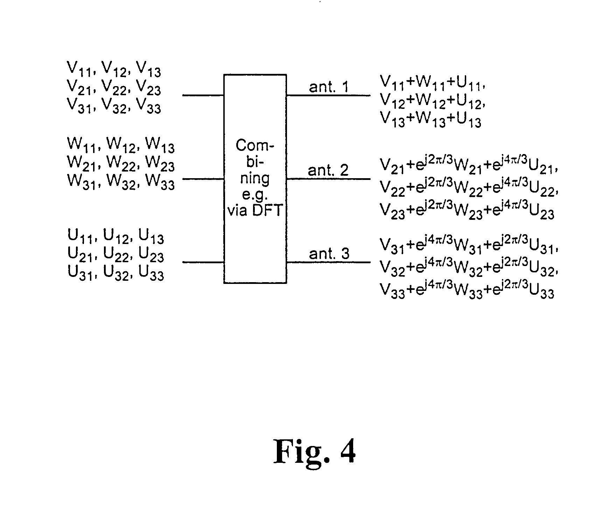

Fig. 4 shows an embodiment for a transmitting system with three adaptive antennas, e.g. $N = N_T = N_R = 3$. While the symbols at the input of the combiner may contain dependencies within one transmit block, consisting in this embodiment of nine symbols along the antenna axes, this dependencies are removed at the output of the combiner because the combiner is based on an orthogonal transformation, here the DFT. It should be emphasised that combining is not necessarily equal to DFT, it is only based on the DFT principles. The symbols at the first antenna $Y_1$ are combined with a mutual phase shift of zero, the symbols of the second antenna $Y_2$ with $2\pi/3$ and the symbols at the third antenna with $4\pi/3$. However, it need not be a DFT, any other orthogonal transformation may be used to create such a multi-stratum signal. The created multi-stratum signal has a dimensionality of three and matches perfect to a channel of dimensionality three. If the channel has a lower dimensionality N, e.g. N = 2 then N = 2 strata are sufficient as well.

**Claims**

1. A method for coding an input signal to generate a plurality of output signals that are foreseen to be emitted by a plurality of antennas comprising the steps of

   - demultiplexing the input signal into a plurality of subsignals
   - mutually superimposing the subsignals
   - applying diversity to each subsignal.

2. A method according to claim 1 wherein for superimposing the subsignals an orthogonal transformation is used.

3. A method according to claim 1 or 2 wherein for applying diversity to the subsignals a space-time code is used.

4. A method according to claim 1 wherein the transmit signal is adapted to the actual channel conditions by means of a feedback signal.

5. A method according to claim 1 or 2 wherein for adaptation different code rates according to the order of decoding are used for encoding.

6. A method according to claim 3 or 4 wherein for adaptation the transmit power is set to different levels.

7. A method according to one of the preceeding claims wherein the substreams are emitted via more than one antenna.

8. A method according to one of the claims 1 to 6 wherein orthogonal frequency-division multiplexing is used for transmitting the different substreams.

9. A method according to one of the claims 1 to 6 wherein the method is applied to orthogonal signals of a code multiplex system.

10. A method according to one of the claims 1 to 6 wherein the method is applied to adaptable antennas.

**11.** A transmitter in which the method claims 1 to 10 are performed.

**12.** A receiver for decoding a receive signal which has been generated according to a method of claims 1 to 6 wherein the decoder uses a decoder that correspons to the diversity coder used in the transmitter.

**13.** A receiver according to claim 12 wherein the decoder makes use of iterative decoding.

**14.** A receiver according to claim 12 or 13 wherein the decoder generates a feedback signal for adapting code rate and/or power level of a transmitter.

**Fig. 1**

EP 1 195 937 A1

b →

p, r →

s →

11

12  $R_1, R_2$

X

13

$x_1$

14a
IDTF
$X_\alpha$

15a
STC
$X_a$

16a
Modulator

17a  $P_1$
PA

2a

$x_2$

14b
IDTF
$X_\beta$

15b
STC
$X_b$

16b
Modulator

$P_2$

17b
PA

2b

Fig. 2

**Fig. 3**

Fig. 4

**EP 1 195 937 A1**

<table>
<tr><td colspan="2">European Patent Office</td><td>EUROPEAN SEARCH REPORT</td><td>Application Number<br>EP 00 12 1621</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | TAROKH ET AL.: "Space-time block coding for wireless communications: performance results"<br>IEEE JOURNAL ON SELECTED AREAS IN COMMUNICATIONS,<br>vol. 17, no. 3, March 1999 (1999-03),<br>pages 451-460, XP002161389<br>Piscataway, US<br>ISSN: 0733-8716<br>* Part III, sextion A * | 1-3,7,<br>11,12 | H04L1/06<br>H04L27/26<br>H04B1/707 |
| Y | | 4-6,9,<br>10,13,14 | |
| Y | HOTTINEN, WICHMANN: "Transmit diversity using filtered feedback weights in the FDD/WCDMA system"<br>INTERNATIONAL ZÜRICH SEMINAR ON BROADBAND COMMUNICATIONS ACCESSING, TRANSMISSION, NETWORKING,<br>15 - 17 February 2000, pages 15-21,<br>XP002161390<br>Piscataway, US<br>ISBN: 0-7803-5977-1<br>* page 15, left-hand column, paragraph 3 *<br>* page 15, right-hand column, paragraph 1 *<br>* page 16, right-hand column, paragraph 3 * | 4,6,9,<br>10,14 | |
| | | | TECHNICAL FIELDS SEARCHED (Int.Cl.7)<br><br>H04L<br>H04B |
| Y | KOUSA, AL-SEMARI: "Adaptive binary coding for diversity communication systems"<br>IEEE INTERNATIONAL CONFERENCE ON PERSONAL WIRELESS COMMUNICATIONS,<br>17 - 19 December 1997, pages 80-84,<br>XP000992269<br>1997, New York, NY, USA, IEEE, USA<br>ISBN: 0-7803-4298-4<br>* figure 1A * | 5 | |

-/--

The present search report has been drawn up for all claims

| Place of search | Date of completion of the search | Examiner |
|---|---|---|
| THE HAGUE | 21 March 2001 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

EP 1 195 937 A1

))) European Patent
Office

**EUROPEAN SEARCH REPORT**

Application Number

EP 00 12 1621

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | YUMIN ZHANG ET AL: "Multistage multiuser detection for CDMA with space-time coding" IEEE WORKSHOP ON STATISTICAL SIGNAL AND ARRAY PROCESSING, 14 - 16 August 2000, pages 1-5, XP002161392 Piscataway, US ISBN: 0-7803-5988-7 * figure 2 * | 13 | |
| X | TAROKH ET AL.: "Space-time block codes from orthogonal designs" IEEE TRANSACTIONS ON INFORMATION THEORY, vol. 45, no. 5, July 1999 (1999-07), pages 1456-1467, XP002161393 Piscataway, US ISSN: 0018-9448 * Part V, section F * | 1-3,7, 11,12 | |
| X | YE LI ET AL.: "Transmitter diversity for OFDM systems and its impact on high-rate data wireless networks" IEEE JOURNAL ON SELECTED AREAS IN COMMUNICATIONS, vol. 17, no. 7, July 1999 (1999-07), pages 1233-1243, XP002161394 Piscataway, US ISSN: 0733-8716 * figure 1 * | 1-3,7-9, 11,12 | TECHNICAL FIELDS SEARCHED (Int.Cl.7) |

-/--

The present search report has been drawn up for all claims

| Place of search | Date of completion of the search | Examiner |
|---|---|---|
| THE HAGUE | 21 March 2001 | Scriven, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

## EUROPEAN SEARCH REPORT

Application Number

EP 00 12 1621

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ARIYAVISITAKUL: "Turbo space-time processing to improve wireless channel capacity"<br>IEEE INTERNATIONAL CONFERENCE ON COMMUNICATIONS,<br>18 - 22 June 2000, pages 1238-1242 vol.3, XP002161395<br>Piscataway, US<br>ISBN: 0-7803-6283-7<br>* figure 1 * | 13 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 21 March 2001 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document